Europäisches Patentamt

European Patent Office

Office européen des brevets

(11) Publication number: **0 209 866 B1**

## EUROPEAN PATENT SPECIFICATION

(45) Date of publication of patent specification: **15.01.92**      (51) Int. Cl.⁵: **G01N 27/26**, G01N 35/00, G03D 3/10

(21) Application number: **86109917.4**

(22) Date of filing: **18.07.86**

(54) **Apparatus for preparation and analysis of electrophoretic cards.**

(30) Priority: **19.07.85 IT 2163985**

(43) Date of publication of application:
**28.01.87 Bulletin 87/05**

(45) Publication of the grant of the patent:
**15.01.92 Bulletin 92/03**

(84) Designated Contracting States:
**AT BE CH DE FR GB IT LI LU NL SE**

(56) References cited:
EP-A- 0 098 773         WO-A-85/00227
AT-B- 135 865           DE-A- 2 047 300
GB-A- 1 479 710         US-A- 3 353 470
US-A- 3 412 667

(73) Proprietor: **Nardo, Pietro**
**Viale Buffoli, 21**
**I-20095 Cusano Milanino (Mi)(IT)**

(72) Inventor: **Nardo, Pietro**
**Viale Buffoli, 21**
**I-20095 Cusano Milanino (Mi)(IT)**

(74) Representative: **Marchi, Massimo et al**
**c/o Marchi & Mittler s.r.l. Viale Lombardia 20**
**I-20131 Milano(IT)**

Rank Xerox (UK) Business Services

## Description

The present invention relates to an apparatus for the preparation and anlysis of electrophoretic cards, i.e. of cards of paper or other material used to support blood specimens subjected to electrophoresis.

Apparatuses based on noncontinuous immersion of individual electrophoretic cards in a receptacle filled from time to time with a treatment substance and then emptied and again filled with a different substance are known.

These known apparatuses have the drawback of involving idle time for empting and filling of the receptacle and hence long analysis times and especially high consumption of substance.

Other known apparatuses operate on a single continuous strip made to travel progressively through a series of treatment areas. In this case however the longitudinal extension of the apparatus is considerable and in general unacceptable or one or more treatment phases must be foregone.

US-A-3353470 discloses a device for automatically developing dental X-ray plates, in which the plates are individually held in vertical planes and moved along said planes through a succession of treatment basins. In this case also the longitudinal extension of the apparatus is too long.

DE-A-2047300 discloses an apparatus for treatment of films, in which a plurality of film supports are continuously moved through a number of positions in each treatment basin. Different treatment times for the several electrophoretic cards cannot be selected.

An object of the present invention is to accomplish an apparatus for the preparation and analysis of individual electrophoretic cards which would not require long and expensive emptying and filling operations and would display at the same time limited longitudinal dimensions.

Another object of the present invention is to accomplish an apparatus which allows selection of different treatment times of the several electrophoretic cards.

In accordance with the invention said objects are achieved by means of an apparatus as defined in claim 1.

An advantage of the apparatus in accordance with the invention lies in the fact that the cards may be subjected to the whole series of treatments called for, once by immersion in a basin, then by immersion in another basin and so on without the necessity of performing emptying and refilling operations of the basin for replacement of the treatment substance. Precious time is thus saved and loss of substance is avoided.

It is furthermore possible to receive simultaneously but independently in a same basin a plurality of cards to be subjected to treatment. In this manner, as a card finishes said treatment it can be transferred to another basin for the following treatment while the other cards continue the first treatment for the same or different time.

A further advantage is that the cards, in the same manner as the basins, are arranged transversely to their direction of movement. This makes it possible to limit the longitudinal dimensions of the apparatus as much as possible, keeping the outside dimensions within acceptable limits even in the presence of all the desired treatments.

These and other characteristics of the present invention together with the related advantages will be made clear by the following description of a possible practical embodiment thereof illustrated by way of example in the annexed drawings wherein:

FIG. 1 shows a diagram in elevation of an apparatus in accordance with the invention, and

FIG. 2 shows a diagram in plan view of the same apparatus.

The apparatus shown in the drawings comprises a base plate 1 on which are mounted all of the various compartments and devices which make up said apparatus.

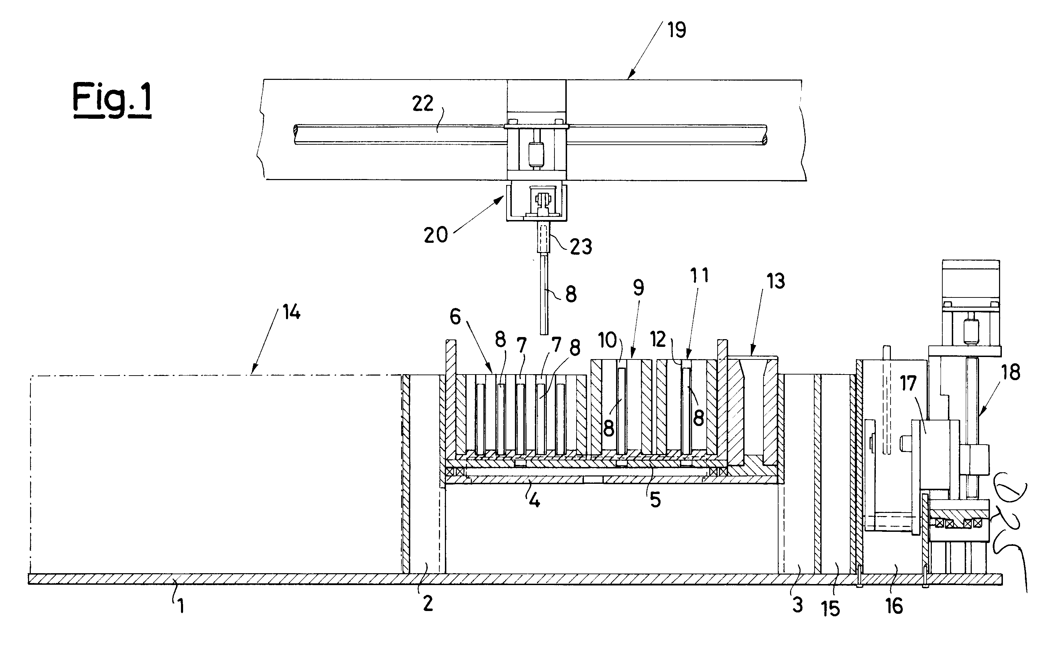

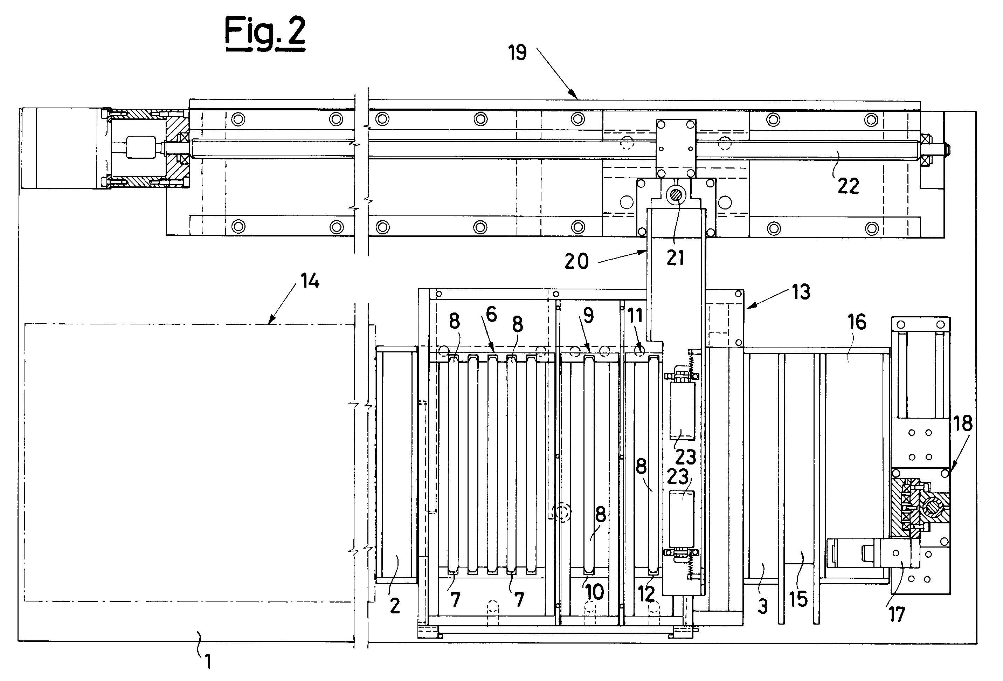

In particular there are provided on the plate 1 two spaced chambers 2 and 3 extended in a transversal direction (FIG. 2) between which is fixed in a raised position (FIG. 1) a support and sliding plate 4 for a frame 5 sliding and extractable in a transversal direction. Said frame bears a first basin 6 with several side by side seats 7 to receive frames 8 for support of the individual electrophoretic cards, a second basin 9 with a single seat 10 to receive one frame 8 at a time and a third basin 11 similarly provided with a single seat 12 for a frame 8. As shown in FIG. 2 all the abovementioned basins are extended in a transversal direction in relation to the direction of development of the apparatus.

The plates 4 function also as a support for a fixed basin 13 equipped with means (not shown) of filling and draining the treatment substance. In the basin 13 specific seats for reception of the frames 8 are not provided.

On the base plate 1 beside the chamber 2 is provided an area for loading and electrophoretic treatment of the blood specimens to be analyzed and which is indicated in broken lines and designated generally with reference number 14. A detailed description thereof will not be given since for the purposes of the present invention any even known structure may be used.

Again on the base plate 1, this time beside the chamber 3, there are provided two more chambers 15 and 16 side by side with the second of which is associated a reader 17 which is movable vertically and horizontally with means noted in themselves indicated collectively by reference number 18.

To move the frames 8 and the related electrophoretic cards from one to the other of the basins 6, 9, 11 and 13 and of the chambers 2, 3, 15 and 16 as well as through the loading and electrophoretic area 14 there is provided a conveyance device 19 which extends from one end of the apparatus to the other and comprises basically a moving element 20 capable of vertical movement under the control of a first screw 21 and horizontal movement under the control of a second screw 22. The moving element 20 includes a pair of pincers 23 (FIG. 2) for grasping and holding a frame 8.

In operation the basins 6, 9, 11 and 13 are designed to receive respective treatment substances in liquid state while the chambers 3, 16 and 15 are designed for the final operations of air drying, reading and drainage. The chamber 2 serves finally for elimination of excessive buffer substance with which the electrophoretic card is soaked initially as will be made clearer below.

The treatment substances with which are filled the basins 6, 9, 11 and 13 making use of the extractability of the sliding frame 5 vary with the type of analysis to be made. The sequence of operations performed during the analysis varies therewith. Specific nonlimiting examples are set forth below.

### 1. Analysis for seroprotein

The basin 6 is filled with a buffer solution in which are immersed with the related frames 8 the cards designed to support the blood specimens to by analyzed. The basin 9 is filled with a liquid coloring substance, the basin 11 is filled with a liquid transparentizing substance and the basin 13 is finally filled with a liquid decoloring substance.

After this initial preparation the apparatus is started for analysis of blood specimens which are in turn arranged in suitable seats in the loading and electrophoretic area 14. More precisely, the moving element 20 of the conveyance device 19 is activated to go and take a frame 8 and then the respective card soaked with buffer solution from a preselected seat 7 in the basin 6. The card taken is then immersed temporarily in the chamber 2 where with the optional aid of appropriate means of removal all excess buffer solution is eliminated.

The card thus prepared is transferred to the treatment area 14 where it receives the blood specimens to be analyzed and subsequently subjected to electrophoretic treatment. This causes formation of small colored traces the pattern of which depends on the composition of the blood sample treated and hence is indicative of the presence and concentration of the various components of the blood.

The moving element of the conveyance device 19 then takes the treated card from the loading and electrophoretic area 14 and inserts it in the basin 9 immersing it in the coloring substance contained therein.

The card is then moved to the basin 13 where the decoloring substance eliminates the color from the entire card except at the blood traces, which keep the coloring received. This is due to the different reaction of the blood traces in contact first with the colorant and then the decolorant.

The card is then immersed in the transparentizing substance contained in the basin 11 receiving thus a treatment which makes it entirely transparent except for the blood traces, which keep their coloring. At this point the card is ready for the final operations which consist of air dessication performed in the chamber 3, reading by the reader 17 in the chamber 16 and finally unloading of the card, which has now been analyzed, performed in the chamber 15.

The sequence described is then repeated for all the other cards which have remained meanwhile immersed in the buffer solution in the basin 6.

### 2. Analysis for haemoglobin

The same preparation and the same sequence of operations as for the seroprotein analysis are performed. Final reading gives of course different results.

### 3. Analysis for lipidograms

Preparation is distinguished from that for the above analysis in that the basin 9 is filled with a fixing solution, the basin 11 is filled with a liquid coloring substance and the basin 13 is filled with water.

Correspondingly, at the end of the electrophoretic treatment the cards are first immersed in the fixative solution in the basin 9, then in the coloring solution in the basin 11 and finally in the water in basin 13. The final operations are the same.

### Claims

1. Apparatus for preparation and analysis of electrophoretic cards, comprising a plurality of substantially parallelepipedal basins (6, 9, 11, 13) for containment of different treatment substances, said basins (6, 9, 11, 13) having longer vertical sidewalls arranged side-by-side, card support means (20) for supporting an electrophoretic card and immersing it into said treatment substances in the basins (6, 9, 11, 13) and card conveying means (19) for conveying said card supporting means (20) from one basin to another at the end of each immersion time of the card in a respective treatment substance, characterized in that said basins (6, 9, 11, 13) comprise stationary seats (7) for accommodating cards in respective vertical planes parallel to said longer sidewalls of the basins for the entire treatment time in the respective basin, said card support means (20) are arranged to hold said electrophoretic card in a vertical plane coinciding with a respective one of said stationary seats (7) and to move it vertically in said plane into and out of said seat (7), and said conveying means (19) are arranged to move said card support means (20) perpendicularly to said vertical plane of the eletrophoretic card.

2.    Apparatus in accordance with claim 1 characterized in that a first basin is designed to contain a buffer solution with which said cards are preliminarily soaked.

3.    Apparatus in accordance with claim 2 characterized in that said first basin includes a plurality of seats to receive cards side by side.

4.    Apparatus in accordance with claim 2 characterized in that a second basin is designed to contain a coloring substance or alternatively a fixative solution.

5.    Apparatus in accordance with claim 2 characterized in that a third basin is designed to contain a transparentizing substance or alternatively a coloring substance.

6.    Apparatus in accordance with claim 2 characterized in that a fourth basin is designed to contain a decoloring substance or alternatively water.

7.    Apparatus in accordance with claims 2-6 characterized in that said first, second and third basins are mounted on an extractable frame while the fourth basin is mounted in a fixed position and equipped with means for loading and unloading the treatment substance.

8.    Apparatus in accordance with claim 2 characterized in that it comprises also a chamber for elimination of excessive buffer solution.

9.    Apparatus in accordance with claim 1 characterized in that it comprises also chambers side by side for drying, reading and unloading of the cards.

## Revendications

1.    Appareil de préparation et d'analyse de cartes d'électrophorèse, comprenant plusieurs cuves sensiblement parallélépipédiques (6, 9, 11, 13) destinées à contenir des substances différentes de traitement, les cuves (6, 9, 11, 13) ayant des parois latérales verticales relativement longues placées côte à côte, un dispositif (20) de support de la carte d'électrophorèse et d'immersion de celle-ci dans les substances de traitement placées dans les cuves (6, 9, 11, 13) et un dispositif (19) de transport du dispositif (20) de support de cartes, d'une cuve à une autre, à la fin de chaque durée d'immersion de la carte dans une substance respective de traitement, caractérisé en ce que les cuves (6, 9, 11, 13) ont des sièges fixes (7) destinés à supporter des cartes dans des plans verticaux respectifs parallèles aux grandes parois latérales des cuves pendant tout le temps de traitement dans la cuve respective, le dispositif (20) de support de cartes est disposé afin qu'il maintienne la carte d'électrophorèse dans un plan vertical coïncidant avec un siège fixe respectif (7) et la déplace verticalement dans ledit plan vers ce siège (7) et à distance de celui-ci, et le dispositif de transport (19) est destiné à déplacer le dispositif (20) de support de cartes perpendiculairement au plan vertical de la carte d'électrophorèse.

2.    Appareil selon la revendication 1, caractérisé en ce qu'une première cuve est destinée à contenir une solution tampon avec laquelle les cartes sont imprégnées de manière préliminaire.

3.    Appareil selon la revendication 2, caractérisé en ce que la première cuve comprend plusieurs sièges destinés à loger les cartes côte à côte.

4.    Appareil selon la revendication 2, caractérisé en ce qu'une seconde cuve est destinée à contenir une substance colorante ou, dans une variante, une substance de fixage.

5.    Appareil selon la revendication 2, caractérisé en ce qu'une troisième cuve est destinée à contenir une substance de mise à l'état transparent ou, dans une variante, une substance de coloration.

6.    Appareil selon la revendication 2, caractérisé en ce qu'une quatrième cuve est destinée à contenir une substance de décoloration ou, dans une variante, de l'eau.

7. Appareil selon les revendications 2 à 6, caractérisé en ce que la première, la seconde et la troisième cuve sont montées sur un châssis qui peut être extrait alors que la quatrième cuve est montée en position fixe et comporte un dispositif de chargement et de déchargement de la substance de traitement.

8. Appareil selon la revendication 2, caractérisé en ce qu'il comprend aussi une chambre destinée à l'élimination de la solution tampon en excès.

9. Appareil selon la revendication 1, caractérisé en ce qu'il comprend aussi des chambres placées côte à côte et destinées à assurer le séchage, la lecture et le déchargement des cartes.

**Patentansprüche**

1. Vorrichtung zur Präparation und Analyse von Elektrophoresekarten, umfassend mehrere im wesentlichen parallelepipedförmige Becken (6, 9, 11, 13) zur Aufnahme verschiedener Behandlungssubstanzen, wobei die Becken (6, 9, 11, 13) lange vertikale Seitenwände aufweisen, die Seite-an-Seite angeordnet sind, Kartenhalter (20) zum Halten einer Elektrophoresekarte und zum Eintauchen in die Behandlungssubstanzen in den Becken, (6, 9, 11, 13) und Kartentransportmittel (19) zum Transportieren der Kartenhalter (20) von einem Becken zu einem anderen nach Ablauf der jeweiligen Immersionszeit der Karte in der entsprechenden Behandlungssubstanz,
**dadurch gekennzeichnet, daß**
die Becken (6, 9, 11, 13) ortsfeste Sitze (7) zur Aufnahme von Karten im jeweiligen Becken für den gesamten Behandlungszeitraum aufweisen, wobei die Karten in einander entsprechenden vertikalen Ebenen parallel zu den langen Seitenwänden der Becken angeordnet sind, die Kartenhalter (20) so gestaltet sind, daß sie die Elektrophoresekarten in einer vertikalen Ebene halten, die sich mit einer entsprechenden Ebene der ortsfesten Sitze (7) deckt, und sie in dieser Ebene in den und aus dem Sitz (7) bewegen können, und die Transportmittel (19) so gestaltet sind, daß sie die Kartenhalter (20) senkrecht zu der vertikalen Ebene der Elektrophoresekarte verschieben können.

2. Vorrichtung nach Anspruch 1, dadurch gekennzeichnet, daß ein erstes Becken so gestaltet ist, daß es eine Pufferlösung aufnehmen kann, mit der die Karten vorbereitend getränkt werden.

3. Vorrichtung nach Anspruch 2, dadurch gekennzeichnet, daß das erste Becken mehrere Sitze zur Aufnahme von Karten in Seite-an-Seite-Anordnung aufweist.

4. Vorrichtung nach Anspruch 2, dadurch gekennzeichnet, daß ein zweites Becken so gestaltet ist, daß es ein Färbemittel oder, alternativ, eine Fixierlösung aufnehmen kann.

5. Vorrichtung nach Anspruch 2, dadurch gekennzeichnet, daß ein drittes Becken so gestaltet ist, daß es ein transparentmachendes Mittel oder, alternativ, ein Färbemittel aufnehmen kann.

6. Vorrichtung nach Anspruch 2, dadurch gekennzeichnet, daß ein viertes Becken so gestaltet ist, daß es ein Entfärbemittel oder, alternativ, Wasser aufnehmen kann.

7. Vorrichtung nach Anspruch 2 bis 6, dadurch gekennzeichnet, daß das erste, zweite und dritte Becken an einem herausnehmbaren Rahmen befestigt sind, wohingegen das vierte Becken in einer festen Position angeordnet und mit Mitteln zum Füllen und Entleeren der Behandlungssubstanz versehen ist.

8. Vorrichtung nach Anspruch 2, dadurch gekennzeichnet, daß die Vorrichtung außerdem eine Kammer zum Entfernen überschüssiger Pufferlösung umfaßt.

9. Vorrichtung nach Anspruch 1, dadurch gekennzeichnet, daß die Vorrichtung außerdem Seite-an-Seite angeordnete Kammern zum Trocknen, Auswerten und Entnehmen der Karten umfaßt.

Fig.1

EP 0 209 866 B1

6

## Fig.2

EP 0 209 866 B1